# EUROPEAN PATENT SPECIFICATION

(11) **EP 2 617 872 B1**
(45) Date of publication and mention of the grant of the patent: **22.05.2019**
(21) Application number: 10836819.2
(22) Date of filing: 16.09.2010
(51) Int. Cl.: C23C 26/00, C23C 30/00

(54) **METHOD FOR FORMING SURFACE LAYER BY MEANS OF ELECTRIC DISCHARGE MACHINING, AND SAID SURFACE LAYER**
VERFAHREN ZUR FORMUNG EINER OBERFLÄCHENSCHICHT DURCH ELEKTRISCHE ENTLADUNGEN UND BESAGTE OBERFLÄCHENSCHICHT
PROCÉDÉ POUR LA FORMATION DE COUCHE SUPERFICIELLE AU MOYEN D'USINAGE PAR DÉCHARGE ÉLECTRIQUE, ET COUCHE SUPERFICIELLE OBTENUE.

(43) Date of publication of application: 24.07.2013
(73) Proprietor: Mitsubishi Electric Corporation, Tokyo 100-8310 (JP)
(72) Inventor: GOTO, Akihiro, Tokyo 100-8310 (JP); SUMI, Nobuyuki, Tokyo 100-8310 (JP); NAKANO, Yoshikazu, Tokyo 100-8310 (JP); YASUNAGA, Yusuke, Tokyo 100-8310 (JP); TERAMOTO, Hiroyuki, Tokyo 100-8310 (JP)
(74) Representative: Hoffmann Eitle
(86) International application number: PCT/JP2010/005656
(87) International publication number: WO 2012/035581

(56) References cited:
- JP-A- 2005 002 880
- JP-B- 5 013 765
- US-A- 4 948 625
- US-A- 5 539 173
- US-A1- 2007 184 298
- US-B2- 7 537 808

## Description

### Technical Field

The present invention relates to electrical discharge surface treatment for forming a film or a surface layer, which is formed of an electrode material or a material formed by reaction of an electrode material with electrical discharge energy, on a base material surface by electric discharge machining.

### Background Art

JP-H05-13765-B discloses a technique of forming an amorphous alloy layer or a surface layer with a fine crystal structure on the work piece surface by performing electrical discharge machining, such that some electrode materials move to the work piece surface in liquid or carbonization gas, using silicon as an electrode for electrical discharge machining.

### Related Art Document

### Citation List

[Patent Document 1] Japanese Examined Patent Application Publication No. H05-13765-B

Further related prior art may be found in US 4 948 625 A describing a method for forming a surface layer by an electric discharge process and US 5 539 173 A dealing with an electric discharge machining fluid.

### Summary of Invention

### Problem that the Invention is to solve

In Patent Document I, a silicon which is a high-resistance material with a specific resistance of about 0.01 Ωcm is used for an electrode, and processing is performed for several hours in an area of φ20 mm by supplying energy with a peak value Ip of 1A which has a very small current pulse using a circuit system of turning on and off a voltage periodically under the conditions where a voltage application time and a pause time are fixed to 3 µs and 2 µs, respectively.

In this current pulse setting, a value of a dropped voltage when a current flows through a silicon electrode at the time of occurrence of electrical discharge becomes a value added to the arc electric potential of electrical discharge, in a control method of detecting the occurrence of electrical discharge by detecting the arc electric potential of electrical discharge. When the value of the dropped voltage is high, the circuit cannot recognize the occurrence of electrical discharge even though the electrical discharge has occurred.

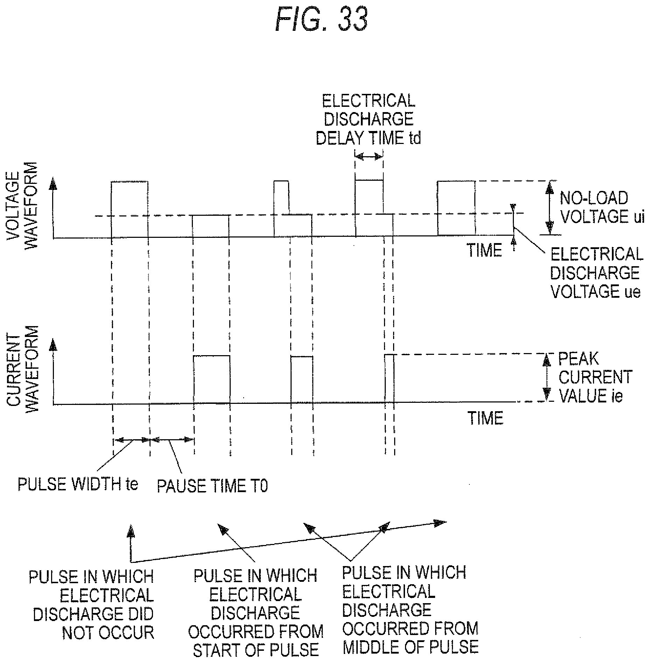

In the periodic machining conditions where the above conditions are fixed, in a period of 3 µs for which a voltage is applied, the timings of the occurrence of electrical discharge in voltage pulses are all different. Accordingly, the current pulse width in which a current flows, which is an actual continuous electrical discharge time, changes in a sequential manner. As a result, stable film formation becomes difficult. (Refer to Fig. 33).

For this reason, a voltage waveform and a current waveform change each time electrical discharge occurs, and this causes a phenomenon in which energy of each pulse is different. Accordingly, since the amount of silicon, which is an electrode material, supplied to a work piece and energy used to form a surface layer by melting the surface of the work piece become varied, stable processing becomes difficult. In addition, since a silicon film based on electrical discharge machining also changes largely, it cannot be formed stably.

As an example, film processing was executed under the conditions disclosed in Patent Document 1 using a cold die steel SKD11 material. As a result, corrosion occurred and expected effects were not acquired.

In addition, although both an electrical discharge voltage and an electrical discharge current are constant in Fig. 33, both the voltage and the current change in practice. In addition, when a high-resistance material, such as silicon, is used as an electrode, it becomes a voltage involving a part of a voltage drop in the silicon electrode. Accordingly, the voltage is high and the fluctuation also becomes large.

That is, since a processing time was very long and there was a variation in a corrosion-resistant film in the processing method disclosed in Patent Document 1, it was found that it could be used only for limited applications.

In addition, although it is disclosed that a surface layer with a thickness of about 3 µm can be formed by performing processing for 2 hours, there is a problem in that a surface layer portion is eaten away by 100 µm in order to form the surface layer. For this reason, applications to a general member has been difficult.

The present invention has been made to solve the above-described problem, and it is an object of the present invention to provide an electrical discharge surface treatment method by which processing is possible within a practical time and a surface layer with excellent corrosion resistance and erosion resistance can be formed.

### Solution to Problem

A surface layer related to the present invention is formed on a work piece surface by moving an electrode material to the work piece by repeatedly generating pulsed electrical discharge between an electrode, which contains Si as a main component, and the work piece surface. The surface layer is characterized in that the Si content is 3 to 11 wt% and the thickness is 5 to 10 µm.

### Advantageous Effects of Invention

According to the present invention, since it is possible to stably form a high-quality film on a work piece by electrical discharge using an Si electrode, a surface layer which exhibits high corrosion resistance and erosion resistance can be formed.

### Brief Description of Drawings

Fig. 1 is an explanatory view of an electrical discharge surface treatment system.
Fig. 2 is a view showing voltage and current waveforms in electrical discharge surface treatment.

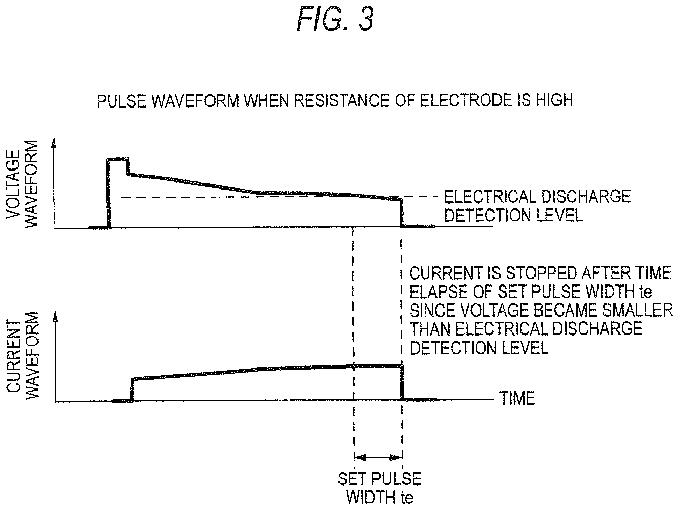

Fig. 3 is a view showing a current waveform when electrical discharge cannot be detected.
Fig. 4 is a view showing an analysis result of a surface layer containing Si.
Fig. 5 is an explanatory view of a corrosion resistance test.
Fig. 6 is an explanatory view of a water jet test.
Fig. 7 is a view showing an evaluation test result of a stainless steel base material.
Fig. 8 is a view showing an evaluation test result of Stellite.
Fig. 9 is a view showing an evaluation test result of a TiC film.
Fig. 10 is a view showing an evaluation test result of an Si surface layer.
Fig. 11 is a view showing an evaluation test result of an Si surface layer.
Fig. 12 is a table of conditions of the Si surface layer.
Fig. 13 is a photograph showing a state where an Si surface layer is broken.
Fig. 14 is a photograph showing an erosion state of Stellite.
Fig. 15 is a characteristic view of erosion resistance of the Si surface layer.
Fig. 16 is a photograph of when an Si surface layer has been cracked.
Fig. 17 is a characteristic view of erosion resistance of the Si surface layer.
Fig. 18 is a characteristic view of erosion resistance of the Si surface layer.
Fig. 19 is a photograph of a surface layer of about 3 µm.
Fig. 20 is a photograph of a surface layer of about 3 µm (after corrosion).
Fig. 21 is a photograph of a surface layer of about 30 µm.
Fig. 22 is a photograph of a surface layer of about 10 µm (after corrosion).
Fig. 23 is a surface photograph of an Si surface layer.
Fig. 24 is a cross-sectional photograph of an Si surface layer.
Fig. 25 is a surface photograph of an Si surface layer when processing changes under the same processing conditions in an Si electrode every time.
Fig. 26 is a cross-sectional photograph of an Si surface layer when processing changes under the same processing conditions in an Si electrode every time.
Fig. 27 is an explanatory view of the principle of a change in surface roughness.
Fig. 28 is a view showing a change in surface roughness of SKD11.
Fig. 29 is a cross-sectional photograph of a surface layer when processing has been performed on SKD 11 for 60 minutes.
Fig. 30 is a view showing a change in surface roughness of SUS304.
Fig. 31 is an X-ray diffraction image of an Si surface layer.
Fig. 32 is an explanatory view of a definition of a film thickness of an Si film.
Fig. 33 is a view showing a conventional electrical discharge phenomenon.

### Description of Embodiments

Hereinafter, embodiments of the present invention will be described using the drawings.

### First embodiment

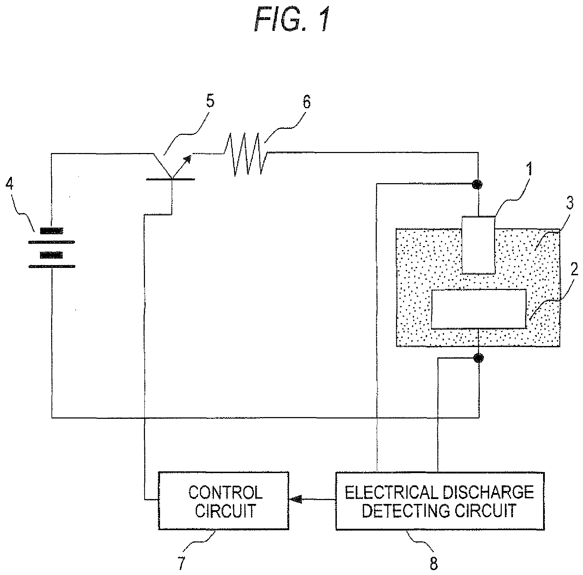

The outline of an electrical discharge surface treatment method of forming a structure with a function of erosion resistance on a work piece surface by making pulsed electrical discharge occur between a silicon electrode and the work piece is shown in Fig. 1.

In the drawing, 1 denotes a solid metal silicon electrode (hereinafter, referred to as an Si electrode), 2 denotes a work piece to be processed, 3 denotes oil which is a machining fluid, 4 denotes a DC power supply, 5 denotes a switching element for applying or stopping a voltage of the DC power supply 4 between the Si electrode 1 and the work piece 2, 6 denotes a current limiting resistor for controlling the current value, 7 denotes a control circuit for controlling ON/OFF of the switching element 5, and 8 denotes an electrical discharge detecting circuit for detecting that electrical discharge has occurred by detecting a voltage between the Si electrode 1 and the work piece 2.

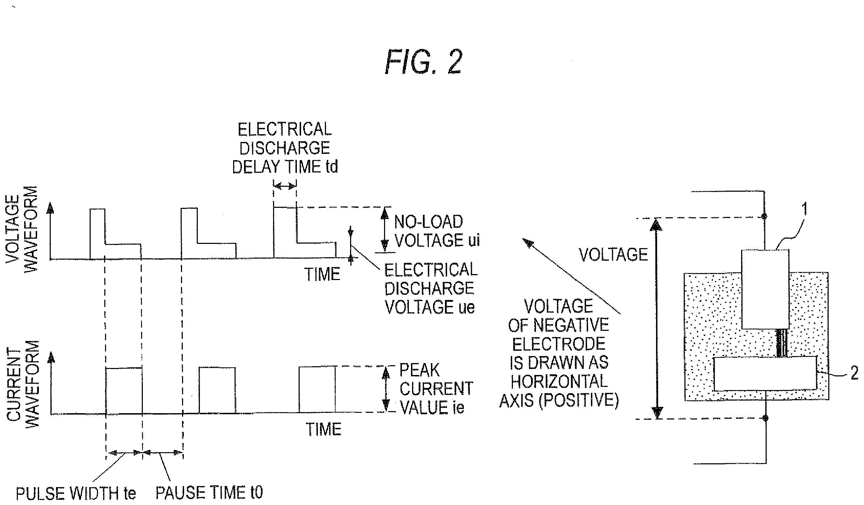

Next, the operation will be described using Fig. 2 in which voltage and current waveforms are shown.

By turning on the switching element 5 by the control circuit 7, a voltage is applied between the Si electrode 1 and the work piece 2. A distance between the Si electrode 1 and the work piece 2 is controlled by an electrode feed mechanism (not shown) so as to be a suitable distance (distance within which electrical discharge occurs), and electrical discharge occurs between the Si electrode 1 and the work piece 2 after a while. A current value ie or a pulse width te (electrical discharge duration) of a current pulse or an electrical discharge pause time t0 (time for which a voltage is not applied) is set in advance, and is decided by the control circuit 7 and the current limiting resistor 6.

If electrical discharge occurs, the electrical discharge detecting circuit 8 detects the occurrence of electrical discharge at a timing where a voltage between the Si electrode 1 and the work piece 2 is dropped, and the control circuit 7 turns off the switching element 5 in a predetermined time (pulse width te) after detecting the occurrence of electrical discharge.

In a predetermined time (pause time t0) after turning off the switching element 5, the switching element 5 is turned on again by the control circuit 7.

By repeating the above-described operation, electrical discharge of a current waveform can be made to occur continuously.

In addition, although the switching element is drawn as a transistor in Fig. 1, other elements may also be used as long as they are elements capable of controlling the application of a voltage. In addition, although the control of a current value is performed by a resistor in the drawing, other methods may also be used as long as the current value can be controlled.

In addition, although the waveform of a current pulse is set as a rectangular wave in the explanation of Fig. 2, it is needless to say that other waveforms can be used. Although it is possible to supply more of the Si material by using different current form or it is possible to use a material effectively by reducing the consumption of an electrode, a detailed explanation thereof is not made in this specification.

By making electrical discharge between the Si electrode 1 and the work piece 2 occur continuously as described above, a layer containing a large amount of Si can be formed on the surface of the work piece 2.

However, all kinds of Si are not necessarily satisfactory in order to stably form a high-quality Si containing layer according to the purpose, and there are also conditions required for the circuit shown in Fig. 1.

That is, the following things became clear from the experiments of inventors.
- n order to form a surface layer containing Si on the surface of a work piece at high speed and in a thickness of about 10 µm so that it can be industrially used by using pulse discharge in oil with silicon as an electrode, it is not possible to use the method disclosed in Patent Document 1, and a circuit based on the method of controlling the pulse width (discharged current pulse) of electrical discharge as shown in Figs. 1 and 2 (making a control to have almost the same pulse width) should be used and a pulse of appropriate energy should be used.
- In order to form a surface layer of about 10 µm on the work piece surface using silicon as an electrode, it is preferable that the resistance (resistivity) is low. If the case where an electrode with a length of 100 mm or more is used is assumed in consideration of industrial practical use, it is preferable that ρ is about 0.005 Ωcm or less. In order to reduce the resistance of Si, it is preferable to increase the concentration of so-called impurities, such as doping other elements.
- Even if ρ is equal to or larger than 0.005 Ωcm, stable processing is possible when the power supply point and the electrical discharge position are close to each other. Preferably, the index in this case is set as follows including the case where ρ is equal to or smaller than 0.005 Ωcm. If the following method is adopted, the processing may be possible even when ρ is about 0.02 Ωcm.

That is, when forming a surface layer containing Si on the work piece surface with the Si as an electrode using a power supply which recognizes electrical discharge by a drop in a voltage applied between electrodes and stops the voltage application (that is, stops electrical discharge) after a predetermined time (pulse width te) elapses from the point of time when the electrical discharge occurred, it is preferable to perform processing in a state where a voltage between electrodes including a voltage drop in the Si electrode, which is a resistor when electrical discharge occurs, is lower than the electrical discharge detection level.

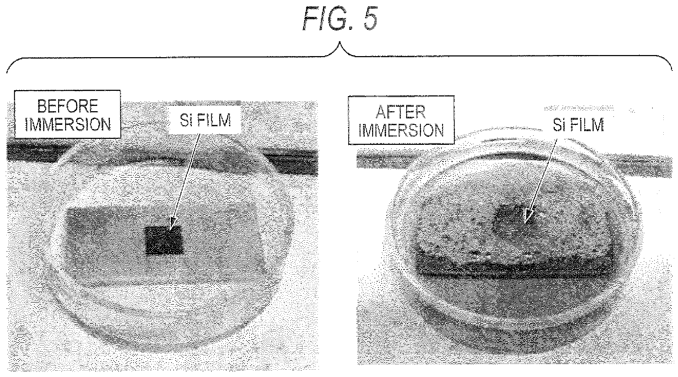

Although the electric potential of an arc is generally about 25 V to 30 V, it is preferable to set the voltage of the electrical discharge detection level to be lower than the power supply voltage and to be higher than the electric potential of the arc. However, if the electrical discharge detection level is set to be low, a risk increases that an abnormally long pulse will be generated as shown in Fig. 5 because the occurrence of electrical discharge cannot be recognized even if the electrical discharge occurs if the resistance of Si is not set to be low.

If the electrical discharge detection level is set to be high, it easily becomes less than the electrical discharge detection level when electrical discharge occurs even if the resistance of Si is slightly high. That is, it is preferable to make the electrode long when the resistance of Si is low and to shorten the length of Si when the resistance of Si is high so that a voltage between electrodes when electrical discharge occurs becomes lower than the electrical discharge detection level. Although the electrical discharge detection level may be set to be lower than the power supply voltage and higher than the electric potential of an arc, it is preferable to set it to a level slightly lower than the power supply voltage from the above explanation.

In the experiments of the inventors, it was found that setting the electrical discharge detection level to a lower value than the voltage of a main power supply by about 10 V to 30 V was practically effective. More strictly, setting the electrical discharge detection level to a lower value than the power supply voltage by about 10 V to 20 V was good since the range of Si that could be used was extended. The main power supply referred to herein is a power supply which supplies a current for the occurrence and continuation of electrical discharge, but is not a power supply of a high voltage superposition circuit which applies a high voltage for the occurrence of electrical discharge (details thereof are not discussed herein).

If the above conditions are satisfied, stabilization can be achieved, and an electrical discharge pulse can be generated stably using Si, which is a high-resistance material, as an electrode. As a result, a surface layer containing Si can be formed on a work piece.

Meanwhile, the surface layer containing Si described above was formed, and the characteristic was examined. As a result, the following was found.

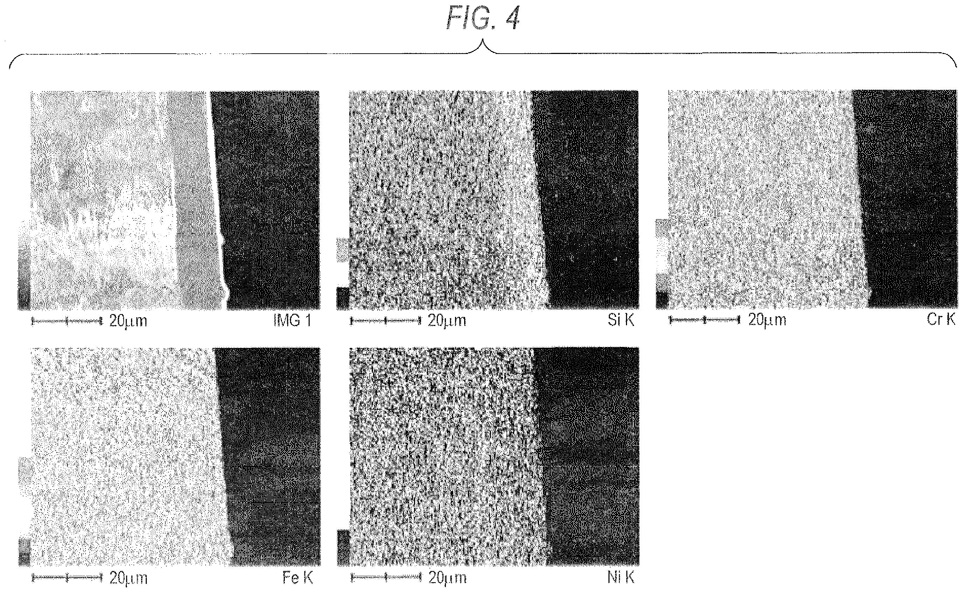

Fig.4 is an analysis result of a surface layer containing Si.

It can be seen that the Si layer is not a single layer of only Si formed on the surface of a work piece but a mixed layer of Si and a work piece in which a material of the work piece and Si are mixed on the surface of the work piece.

In Fig. 4, an upper left photograph is an SEM photograph of the cross section of an Si surface layer, an upper middle photograph is a surface analysis result of Si, an upper right photograph is a surface analysis result of Cr, a lower left photograph is a surface analysis result of Fe, and a lower right (middle) photograph is a surface analysis result of Ni.

As can be seen from the above, in the Si surface layer, Si is not placed on a base material but is formed as a portion with an increased Si concentration in a surface portion of the base material.

From this result, it can be seen that although the Si surface layer is a surface layer with a certain thickness, it is a surface layer in a state where Si permeates the base material with high concentration since the Si is united with the base material.

This surface layer is an iron-based metal structure with an increased Si content. Accordingly, since an expression "film" is not appropriate, it will be called an Si surface layer below for the sake of simplicity.

Since this is in such a state, the surface layer is not peeled off unlike in other surface treatment methods. As a result of examination regarding this surface layer, high corrosion resistance was confirmed. In addition, it was found that the erosion resistance was very high when some conditions were satisfied. The erosion is a phenomenon where a member erodes by water or the like and is also a phenomenon leading to failure of a piping component along which water or steam passes, a moving blade of a steam turbine, and the like.

Here, how to evaluate the corrosion resistance and the erosion resistance, which will be discussed later in this specification, will be described.

### • Corrosion resistance

Regarding the corrosion resistance, a method of immersing a test piece formed with a film in aqua regia and observing the state of corrosion was adopted. An example of an experimental state is shown in Fig. 5. An Si surface layer was formed in a part of a test piece and was immersed in aqua regia to observe the state of corrosion of a surface layer portion and the state of corrosion of portions other than the surface layer. In Fig. 5, an (10 mm × 10 mm) Si surface layer is formed in the middle of the test piece. In the corrosion test using aqua regia in this specification, it was immersed in aqua regia for 60 minutes and the surface was observed. In addition, a salt spray test of spraying salt water onto a test piece in order to observe the generation of rust, a salt water immersion test of immersing a test piece in salt water in order to observe the generation of rust, and the like were done to decide the corrosion resistance. However, details thereof are omitted in this specification.

### • Evaluation test of erosion resistance

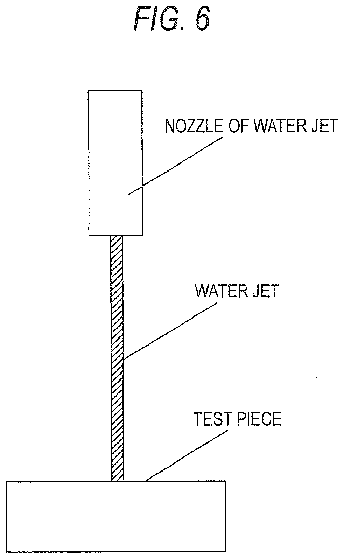

As evaluation regarding erosion resistance performance, a test of comparing the state of erosion by striking the test piece with a water jet was performed as shown in Fig. 6. Here, an experimental result showing the high erosion resistance of an Si surface layer which satisfies predetermined conditions will be described first. The predetermined conditions will be described later.

Regarding the erosion resistance performance of the present embodiment, a test result will be described below. As evaluation of erosion resistance, the state of erosion was compared by striking the test piece with water jet.

The water jet was sprayed at a pressure of 200 MPa. As test pieces, four kinds of test pieces of 1) a stainless steel base material, 2) Stellite (generally, a material used for erosion resistance), 3) a test piece obtained by forming a TiC film on the stainless steel base material surface by electrical discharge, and 4) a test piece obtained by forming a surface layer with a large amount of Si on the stainless steel by the present invention were used.

The film of 3) is a TiC film formed by the method disclosed in WO 01/005545, and is a film with high hardness.

The water jet was sprayed on each test piece for 10 seconds, and the erosion of the test piece was measured by a laser microscope.

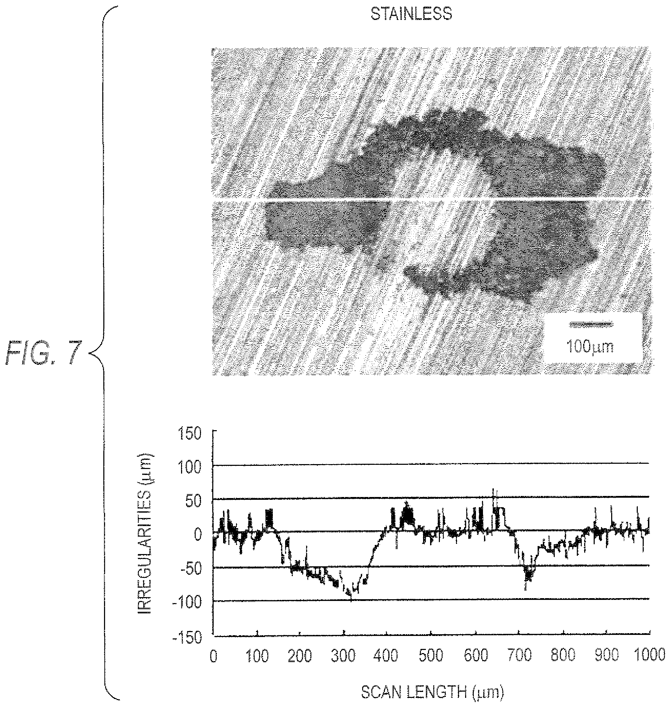

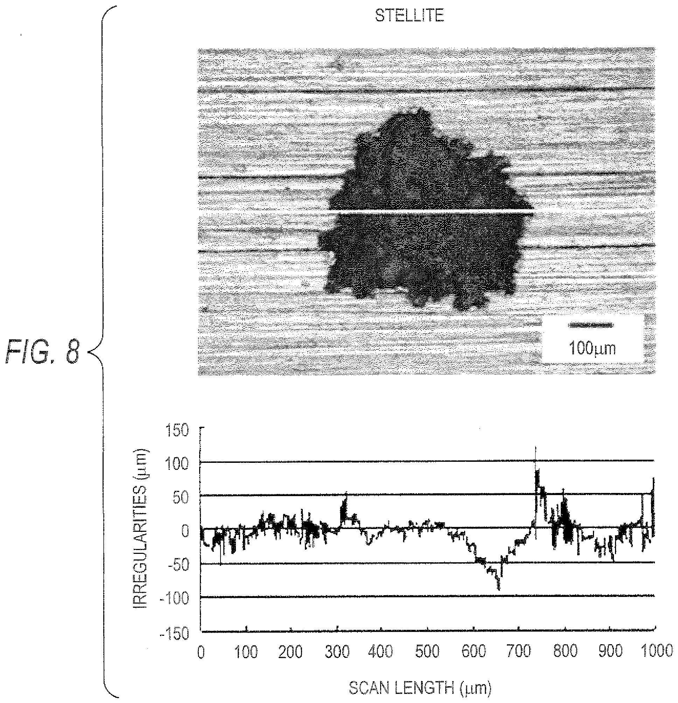

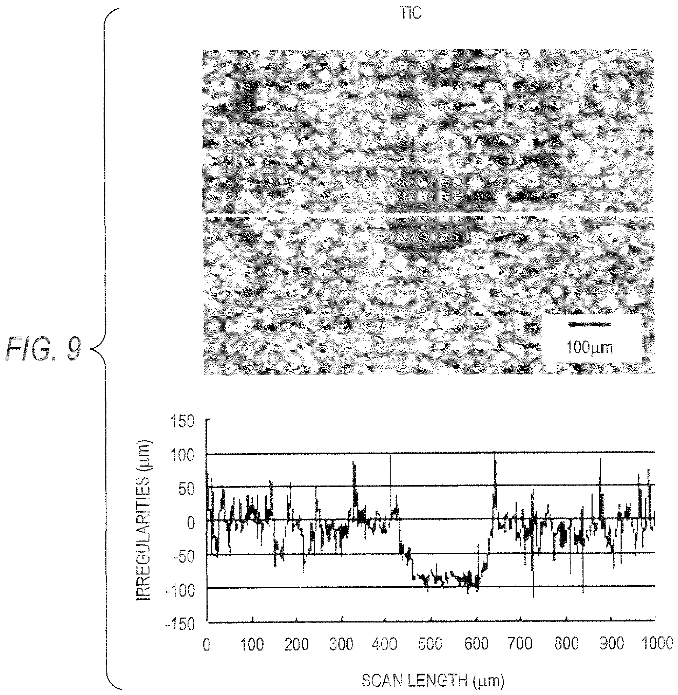

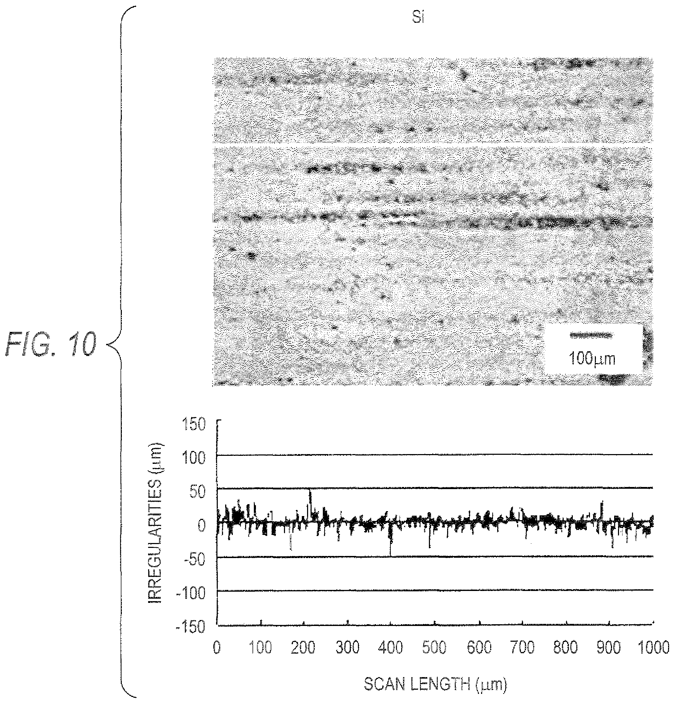

Fig. 7 is a result of 1), Fig. 8 is a result of 2), Fig. 9 is a result of 3), and Fig. 10 is a result of 4), that is, in the case of a surface layer according to the present embodiment.

As shown in Fig. 7, the stainless steel base material eroded up to the depth of about 100 µm when it was struck by a water jet for 10 seconds.

On the other hand, as shown in Fig. 8, in the Stellite material, the state of erosion is different, but the depth is about 60 to 70 µm. Accordingly, it was confirmed that the Stellite material had an anti-erosion property to some extent.

Fig. 9 is a result of a TiC film with very high hardness, but it erodes up to the depth of 100 µm. This result shows that the erosion resistance does not depend on only the surface hardness.

On the other hand, Fig. 10 is a result in the case of a surface layer of Si according to the present embodiment, and it can be seen that it has hardly been corroded.

The hardness of this surface layer was about 800 HV (since the thickness of the surface layer was small, it was measured with a load of 10g using a micro hardness tester. The hardness range was a range of about 600 to 1100 HV). This hardness is higher than the stainless steel base material (about 350 HV) shown in 1) or the Stellite material (about 420 HV) shown in 2) but lower than the TiC film (about 1500 HV) shown in 3).

That is, it can be seen that the anti-erosion property is a complex effect including not only the hardness but also other characteristics.

In Fig. 9, hollowing is apparent in spite of a hard film. Accordingly, it is presumed that when only the surface is hard, it is broken by the impact of a water jet in the case of a thin film which is not a tough surface.

On the other hand, the film of 4) in the present embodiment is tough in addition to having the crystal structure of the surface layer, which will be described later. Therefore, it becomes a surface capable of withstanding the deformation, and this point is presumed to be a cause showing the high erosion resistance.

The surface layer of 4) is tested with a thickness of about 5 µm. However, in the case of a thin film, it was additionally confirmed that the strength was not sufficient either and erosion easily occurred.

It is considered that, one of the main reasons why the erosion resistance was not found in Patent Document 1, which is the related art, even though a film of Si was examined and high corrosion resistance was clear, is that the surface layer could not be made thick.

In the case of erosion resistance, it is preferable to have a surface layer of 5 µm or more even though it depends on the speed at which a material as a cause of erosion, such as water, collides. It is needless to say that a desirable thickness changes depending on the collision material. For example, in the case of high speed or a large droplet, it is preferable that the surface layer is thick.

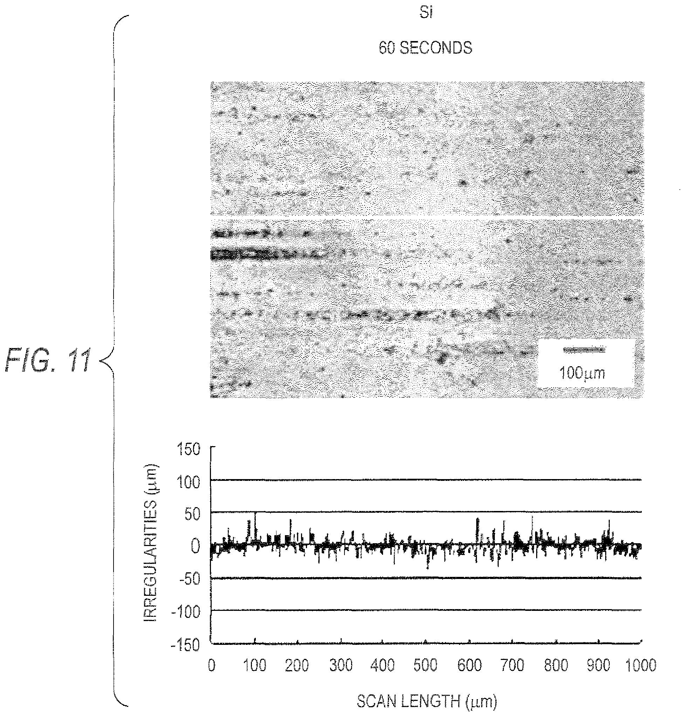

Since erosion could hardly be confirmed in the test of the surface layer of Si shown in 4), a result obtained by extending the test regarding the surface layer of Si such that the surface layer is struck by a water jet continuously for 60 seconds is shown in Fig. 11.

The location struck by the water jet is slightly polished and is distinguishable, but it can be seen that it is hardly worn.

As described above, high erosion resistance of the surface layer of the present embodiment was confirmed.

It was found that there were two important elements in order to acquire the anti-erosion property and the anti-corrosion property described above. One of them is the film forming conditions, and the other one is a time for which a film is formed, more accurately, the progress of processing. Each will be described in detail below.

First, the film forming conditions which are the first element will be discussed.

The influence of film forming conditions will be described from the evaluation result of erosion resistance using a water jet.

The state of erosion was examined by striking a film with a water jet under each of the conditions.

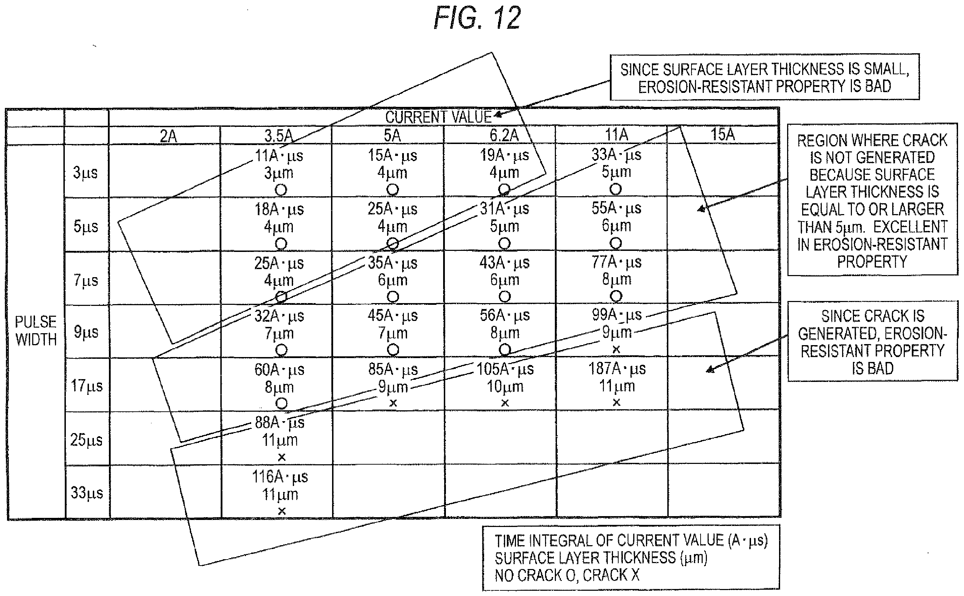

Fig. 12 shows, for each processing condition, the value (A·µs) of time integral of a current value of an electrical discharge pulse which is a value equivalent to energy of an electrical discharge pulse in the condition (in the case of a rectangular wave, current value ie × pulse width te), the thickness of the Si surface layer in the processing condition, and the existence of a crack of the Si surface layer.

As the processing conditions, the horizontal axis indicated the current value ie and the vertical axis indicated the pulse width te, and a current pulse of a rectangular wave with the value was used. A base material used for this test was SUS630.

Si with ρ = 0.01 Ωcm was used, an electrode with a size in a range where an electrical discharge pulse was normally generated was formed to perform the test. As can be seen from the drawing, the film forming conditions, that is, energy of an electrical discharge pulse is closely related with the thickness of a film (film thickness), and it can be said that energy of an electrical discharge pulse is almost proportional to the film thickness.

From the drawing, the existence of a crack can be seen as one of the formation conditions of the Si surface layer. The existence of a crack is strongly correlated with energy of an electrical discharge pulse. It can be seen that "when the time integral value of an electrical discharge current which is an amount equivalent to energy of an electrical discharge pulse is in a range equal to or smaller than 80 A·µs" is the condition for forming an Si surface layer without a crack.

Undoubtedly, whether or not a crack is generated according to the processing conditions is also influenced slightly by a base material.

For example, among materials called stainless steel, there is a tendency that the generation of a crack relatively rarely occurs in a material which is a solid solution, such as SUS304, and a crack is generated somewhat easily in a precipitation hardening material, such as SUS630. Since precipitation hardening stainless steel, such as SUS630, is generally used for a steam turbine, a desirable range where a crack is not generated is slightly narrower than austenitic stainless steel, such as SUS304.

It has been described that since the thickness of the Si surface layer is correlated with the time integral value of an electrical discharge current which is an amount equivalent to energy of an electrical discharge pulse, the thickness decreases as the time integral value of an electrical discharge current decreases and the thickness increases as the time integral value of an electrical discharge current increases. The thickness referred to herein is a thickness in a range where melting occurs with energy of electrical discharge and into which Si, which is an electrode component, is injected.

Although the range of heat influence is decided by the time integral value of an electrical discharge current which is an amount equivalent to the size of energy of an electrical discharge pulse, the amount of injected Si is also affected by the number of times of occurrence of electrical discharge. When the amount of electrical discharge is small, the amount of Si injected is undoubtedly not sufficient. Accordingly, the amount of Si of the Si surface layer is decreased.

On the contrary, even if electrical discharge occurs sufficiently, the amount of Si of the Si surface layer is saturated at a certain value. This point will be described in detail later when discussing a film formation time which is the second element.

Although the explanation comes later, the performance of the Si surface layer will be discussed below.

In addition, there are two modes in terms of erosion. One is a mode in which a surface is largely cut by the impact of water, and the other one is a mode in which a surface is scratched and cut when water strongly strikes the surface or flows through the surface.

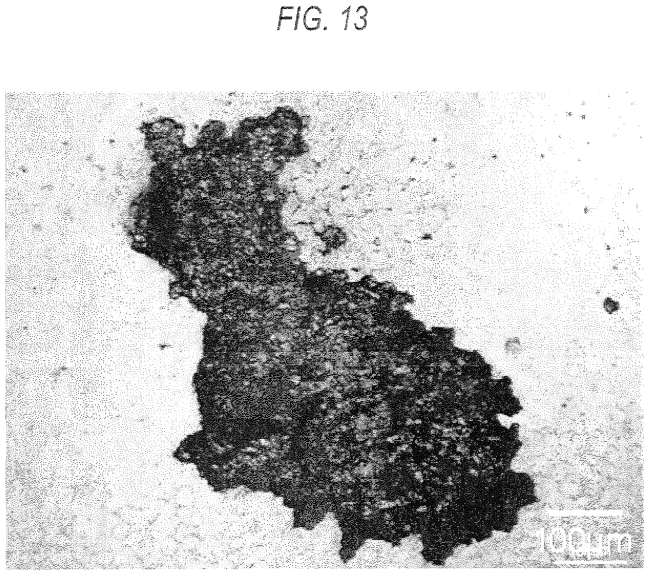

Fig. 13 is a result in which an Si surface layer with a thickness of 3·µm was damaged when struck with the water jet of 200 MPa for 60 seconds. Although a mark stripped off finely is not visible, it can be seen that it is largely broken so as to be cut greatly. It is considered that this is not damage resulting from stripping off by collision of water but is a result of damage due to the Si surface layer not being able to withstand the striking by lots of water from the water jet. That is, this shows that when the Si surface layer is as thin as 4 µm or less, it is effective to some extent for a mode in which water scratches and scrapes the surface when flowing on the surface while striking the surface strongly but is less effective for a mode in which the surface is largely removed by the impact of water.

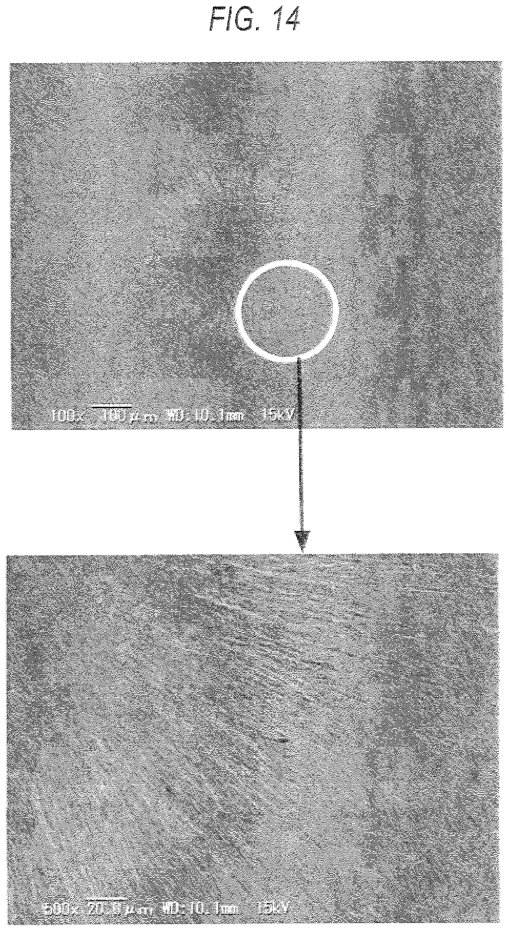

In addition, Fig. 14 is a result when Stellite No.6, which is a material with high erosion resistance, is used and is struck by the water jet of 90 MPa for 60 seconds. In the drawing, the mode in which water scratches and scrapes the surface when flowing on the surface while striking the surface strongly is shown.

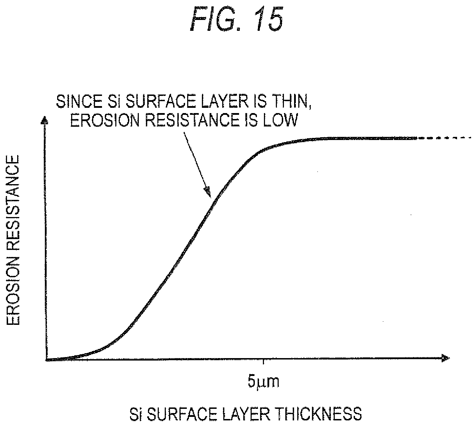

Next, the relationship between the thickness of the Si surface layer and the erosion resistance is shown in Fig. 15.

As shown in the drawing, it was found that when the thickness of the Si surface layer was equal to or smaller than 4 µm, if a water jet was sprayed at the speed of about sound speed which was equivalent to a speed at which water droplets collide with a turbine blade in a steam turbine, a film could not withstand this if the Si surface layer was thin and accordingly, a probability that a phenomenon of surface breakage would occur was high.

The reason why the film is weak against impact if the Si surface layer is thin and strong against impact if the Si surface layer is thick is presumed as follows. That is, if the Si surface layer is thin, distortion is gradually accumulated in a base material when impact is given and finally, breakage occurs from the grain boundary of the base material. However, if the Si surface layer is thick, the base material is protected because it is difficult for distortion to reach the base material. In addition, since the Si surface layer is an amorphous structure, there is no grain boundary. Therefore, breakage in a grain boundary does not occur.

From this point of view, in order to make the Si surface layer thick, it is necessary to increase energy of an electrical discharge pulse. It was found that energy of an electrical discharge pulse needed to be equal to or larger than 30 A·us in order to make the Si surface layer have a thickness of 5 µm or more.

Although the erosion resistance can be raised by increasing the film thickness of the Si surface layer as described above, there is also a problem caused by increasing the film thickness, and this may worsen the erosion resistance. As described above, it is necessary to increase energy of an electrical discharge pulse in order to make the Si surface layer thick. However, as the energy of an electrical discharge pulse increases, the influence of heat also increases such that a crack is generated on the surface. The possibility of the generation of a crack increases as the energy of an electrical discharge pulse increases. When it is processed in a pulse of 80 A·µs or more as described above, a crack is generated on the surface.

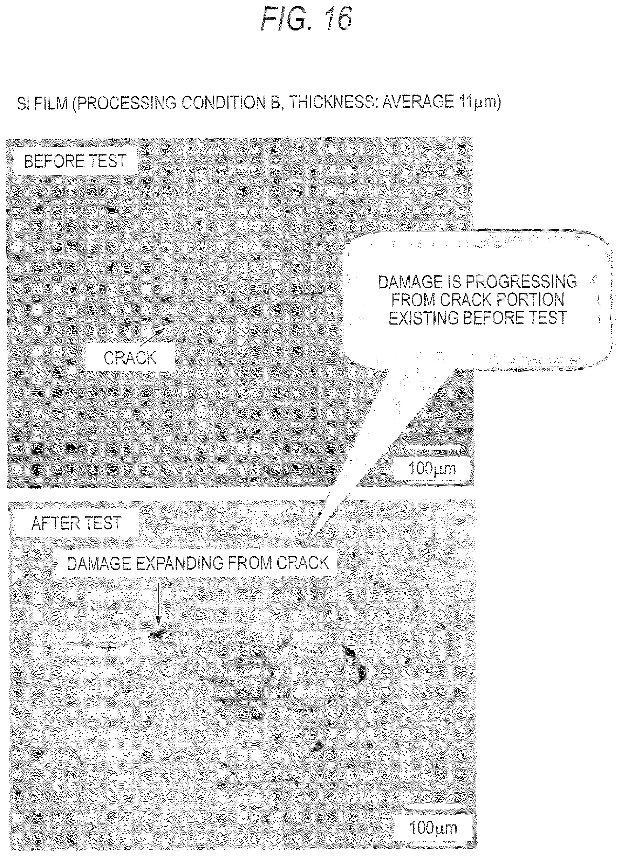

It was found that the anti-erosion property noticeably worsened when a crack was generated on the surface. Fig. 16 shows a state where cracking is progressing by striking the Si surface layer, which was processed under the electrical discharge pulse conditions of 80 A·µs or more, with a water jet. If it continues further, the film is largely broken in a certain range. When the Si surface was processed under the electrical discharge pulse conditions of 80 A·µs, the film thickness became about 10 µm. Accordingly, it was found that this became a practical upper limit of the Si surface layer for application of erosion resistance.

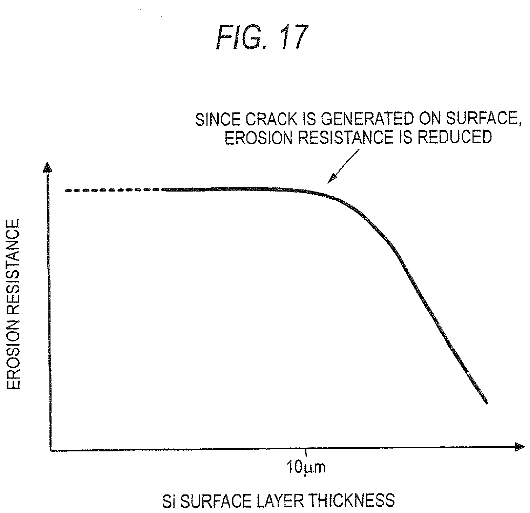

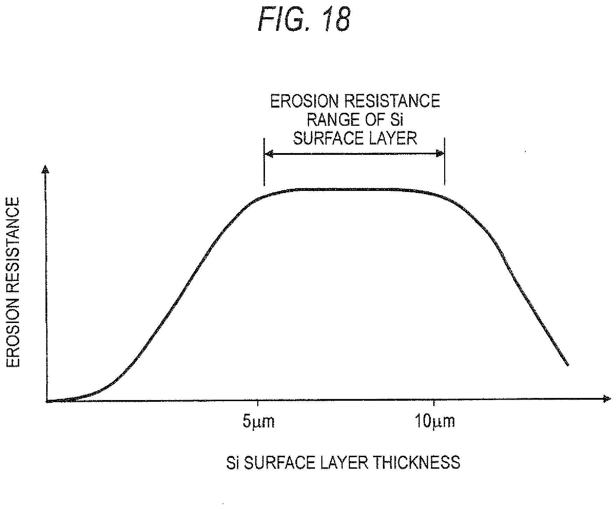

From the point of view of cracks, the relationship between the film thickness of the Si surface layer and the erosion resistance is shown in Fig. 17. It was found that if Figs. 15 and 17 were combined, the relationship between the film thickness of the Si surface layer and the erosion resistance came to be like Fig. 18.

The above is summarized as follows. In order to form an Si surface layer with an anti-erosion property, the thickness of the Si surface layer needs to be equal to or larger than 5 µm. Accordingly, the energy of an electrical discharge pulse needs to be equal to or larger than 30 A·µs.

On the other hand, in order to prevent a surface crack, the energy of electrical discharge pulse needs to be equal to or smaller than 80 A·µs. Accordingly, the thickness of the Si surface layer becomes equal to or smaller than 10 µm.

That is, a condition for forming an Si surface layer with an anti-erosion property is that a film with a thickness of 5 µm to 10 µm is suitable. Therefore, energy of an electrical discharge pulse is 30 A·µs to 80 A·µs. In this case, the film hardness is in the range of 600 HV to 1100 HV.

While the film forming conditions have been described from the point of view of erosion, it was found that there was almost the same tendency for the corrosion resistance. It has been reported that high corrosion resistance is obtained when an Si surface layer is formed on steel material. However, it was found that this was largely influenced by film forming conditions and the raw material. Also in the case of corrosion resistance, it is very important that there is no crack on the surface when the energy of an electrical discharge pulse is equal to or smaller than 80 A·µs. On the surface where a crack has been generated, corrosion progresses from the crack. Accordingly, the anti-corrosion property for such a material cannot be expected.

In addition, on the contrary, it was found that when energy of an electrical discharge pulse was small and a film was thin, the corrosion resistance was not acquired enough practically in many cases. When considering the conditions required for the film thickness, it is also necessary to consider which material is to be used to form a film. Although the above-described test was performed using SUS630, there is a mold field as an important object to which the present invention is applied. The same corrosion resistance test was also performed for cold die steel SKD11 which is a main material used in the mold field, a carbon steel for mechanical structure S-C material which is a material used for parts, and the like.

SUS630 or SUS302 are materials with little precipitate or materials with a relatively small amount of precipitate even if it exists. On the other hand, for materials with a large amount of precipitate like SKD11 or S50C, a defect occurs in a surface layer when the surface layer is thin. Since a precipitate is in the surface layer, it reduces the corrosion resistance of the surface layer or becomes an origin of erosion. In addition, when electrical discharge occurs, a precipitate is a cause of a defect generated in the surface layer because a base material and the ease of occurrence of electrical discharge or a state where a material is removed when electrical discharge occurs is different.

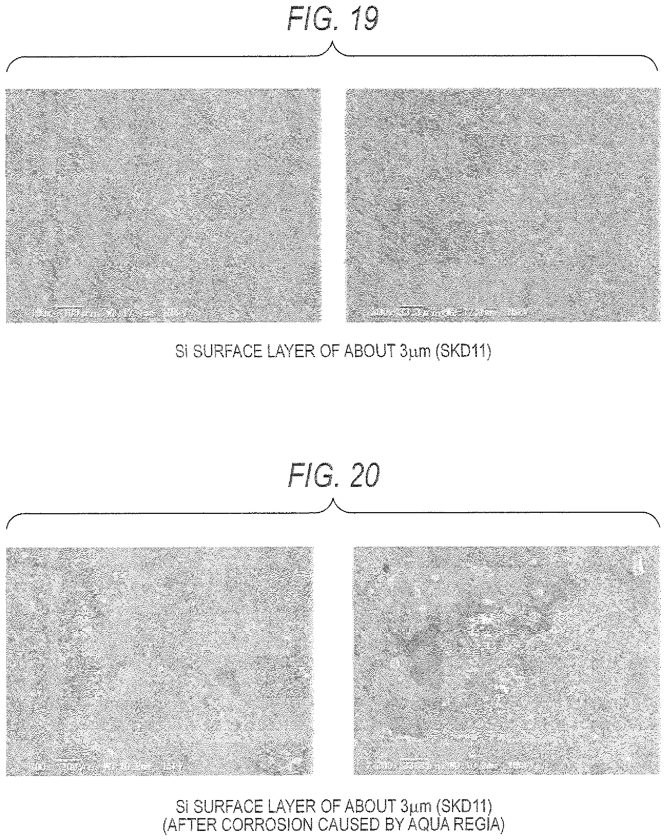

Fig. 19 shows a state where an Si surface layer of about 3 µm is formed on the surface of cold die steel SKD11, which is frequently used in the mold field or the like, under the conditions close to the conditions in Patent Document 1, and Fig. 20 shows a photograph when the Si surface layer is corroded in aqua regia.

In a material used generally frequently, it was found out that sufficient corrosion resistance was not acquired in the Si surface layer of about 3 µm. The processing time at this time is an optimal processing time, which will be described later. In addition, when forming the surface layer of about 3 µm, conditions equivalent to the conditions in the related art by the power supply method of the present invention are used instead of the power supply circuit method of the method in the related art shown in Fig. 33.

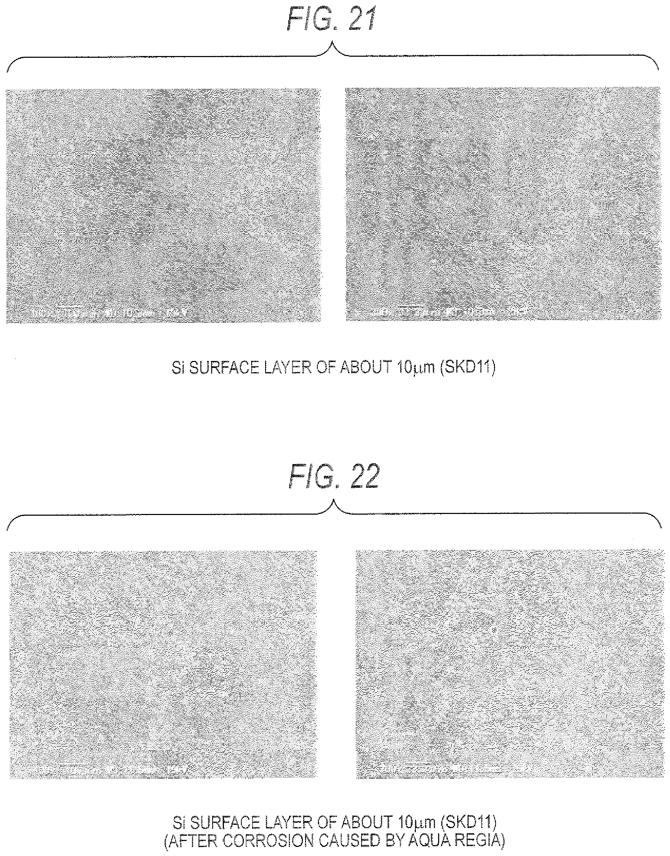

On the other hand, Fig. 21 is a surface photograph when an Si surface layer of about 10 µm was similarly formed in various materials. It can be seen that in the surface layer forming conditions of about 5 µm to 10 µm, there is no defect of the surface which was a problem in the case of a surface layer of 3 µm and accordingly, the surface layer is formed uniformly. Although Fig. 22 is a photograph after corrosion in aqua regia, it can be confirmed that there is no damage on the surface and the corrosion resistance is high.

In order to acquire such corrosion resistance, it is preferable to form an Si surface layer of about 5 µm or more.

Next, since there is a problem related to corrosion resistance in a surface layer with a thickness of 3 µm, the reason why a surface layer with a thickness of about 5 µm to 10 µm has an anti-corrosion property will be considered.

Generally, there is a non-uniform structure, such as a precipitate, inside steel material. It is equal to or larger than about several micrometers in many cases. For this reason, even if an Si surface layer is formed on the material surface, the influence of a precipitate may remain on the surface.

Particularly under the conditions where energy of a pulse at the time of processing is small, it can be easily expected that the influence of a precipitate is large.

The limit up to which such an influence becomes strong is estimated to be about 5 µm. This does not necessarily mean that the size of a precipitate is 5 µm to 10 µm. Even if this is a material in which a precipitate and carbide of 10 µm or more are present, uneven distribution of materials could be barely found in a portion of a surface layer. It is considered that this is because a base material and Si supplied from an electrode are agitated while making electrical discharge repeatedly occur and accordingly, it becomes a uniform structure.

Thus, it was found that high corrosion resistance was acquired when the Si surface layer with a thickness exceeding 5 µm was formed. However, in order to acquire the high corrosion resistance, not only the processing conditions but also important conditions of an appropriate processing time, which will be described later, should be satisfied. When these conditions were satisfied, the erosion resistance was confirmed similarly.

From various kinds of experiments, it was found that exhibiting the characteristics of the Si surface layer termed the corrosion resistance and the erosion resistance with general materials in such a wide range was difficult when the thickness of the surface layer was about 3 µm and that satisfactory characteristics were obtained when the thickness of the surface layer was about 5 µm or more.

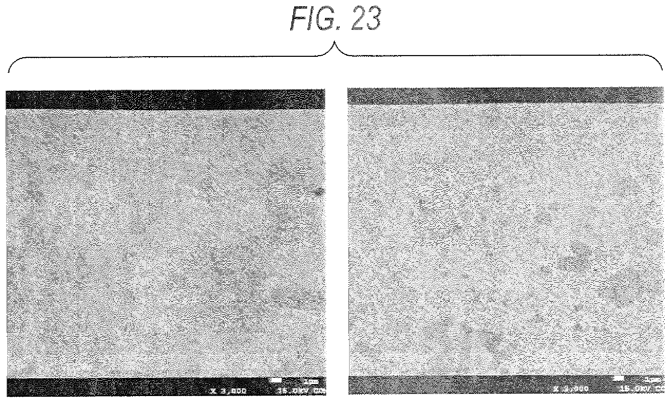

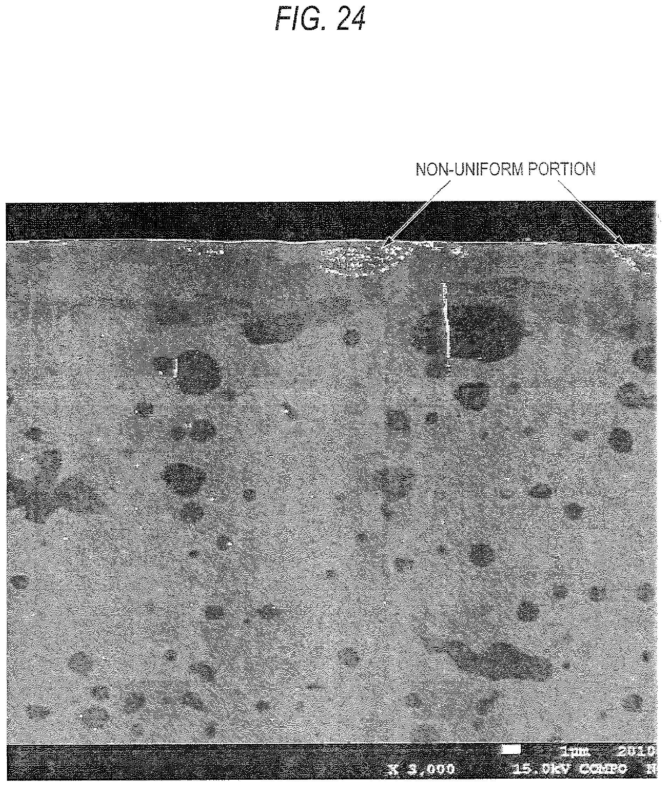

Fig. 23 shows a cross-sectional photograph (two places) of a surface layer formed under the conditions of forming a surface layer of about 5 to 10 µm, and Fig. 24 shows a cross-sectional photograph of a surface layer formed under the conditions of forming a surface layer of about 3 µm which are close to those in the related art.

It can be seen that a surface layer part shown in Fig. 23 is uniformly formed and there is no non-uniform portion (precipitate or the like). As described above, this does not necessarily mean that the size of a precipitate is equal to or smaller than 5 µm. Even in a material with a precipitate of about several tens of micrometers, a homogeneous surface layer can be formed if processing is performed under such conditions.

On the other hand, in Fig. 24, a surface layer of about 2 to 3 µm is formed, but non-uniform portions are observed in the surface layer. Since a lot of C (carbon) is detected when element analysis of this portion is performed, it is thought that they are precipitates, such as carbide. That is, under these conditions, components of precipitates cannot be uniformly distributed in the surface layer. As a result, it is thought that the corrosion resistance and the erosion resistance are weakened.

The reason why the film thickness of about 10 µm or less is required as a condition in which the Si surface layer acquires an anti-erosion property and an anti-corrosion property is easily understood. If a crack is generated on the surface by the influence of heat, both the erosion resistance and the corrosion resistance may be reduced.

However, it is not so easy to clearly explain the reason why the necessity of the thickness of 5 µm or more is the same in both the erosion resistance and the corrosion resistance. In the case of an application such as a steam turbine, the thickness of a surface layer may need to be equal to or larger than 5 µm in order to withstand the load of collision of water droplets. However, it may also be thought that making the inside composition of the surface layer uniform contributes to withstanding erosion as described above. Nonetheless, it is thought that the consistency of the structure of a surface layer requested for seemingly different functions of corrosion resistance and erosion resistance implies many things.

Next, a time (more accurately, progress of processing) for which a film is formed, which is the other element, will be discussed. As described above, although the pulse conditions when forming the Si surface layer and the thickness of the Si surface layer, which is mostly decided by the pulse conditions and which has a large effect on the characteristic of the Si surface layer, have been described, the performance is not necessarily decided by only the pulse condition.

The following was found by analysis of the Si surface layer from which the corrosion resistance and the erosion resistance described above were obtained.

The amount of Si was 3 to 11 wt% when a sufficient amount of Si was contained in the Si surface layer. A more stable performance was obtained in the Si surface layer by using 6 to 9 wt%. The amount of Si referred to herein is a value measured by an energy dispersive X-ray spectroscopic method (EDX), and the measuring conditions are an acceleration voltage of 15.0 kV and an irradiation current of 1.0 nA.

In addition, the amount of Si is a value of a portion indicating almost the maximum value in the surface layer. In order to obtain this performance, there should be an optimal processing time. This was examined as follows. In addition, although it was described as a processing time, how much Si is supplied to a work piece from an electrode is actually important. For example, a processing time in terms of the significance of how much electrical discharge per unit area is made to occur is important. That is, the proper processing time is undoubtedly increased if a pause time of electrical discharge is set to be long, and the proper processing time is shortened if a pause time of electrical discharge is set to be short. This becomes almost equal to the idea regarding how much electrical discharge per unit area is made to occur. However, in this specification, the "processing time" is used unless specified otherwise for the simplicity of explanation.

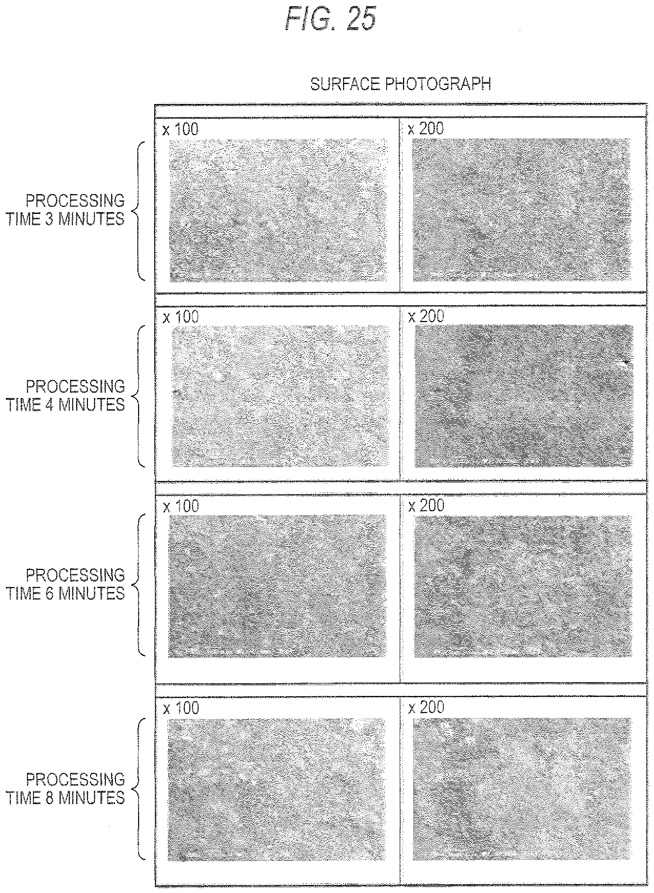

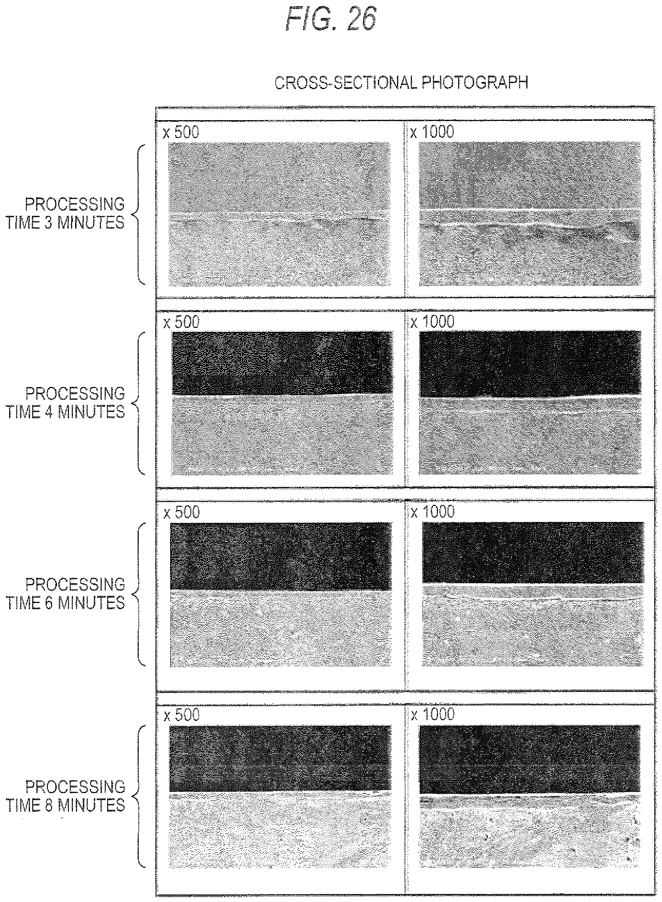

Although the point in which the amount of Si of the Si surface has an effect on the property of unevenness of the surface has been described, the example is shown in Figs. 25 and 26.

Processing of an Si electrode under the same processing conditions was performed while changing it every time, and the state of the surface of the Si surface layer was observed (Fig. 25) and the cross section of the Si surface layer was observed (Fig 26).

Since all processings are performed under the same processing conditions, it may be thought that the ratio of processing time is almost the same as the ratio of the number of times of electrical discharge that occurred. That is, the number of times of electrical discharge is small when the processing time is short, and the number of times of electrical discharge is large when the processing time is long. (However, since a processing time changes according to the conditions, such as a pause time, a required processing time changes if the pause time changes in order to generate the same number of electrical discharge pulses.)

The processing time of the Si surface layer shown in the drawing is 3 minutes, 4 minutes, 6 minutes, and 8 minutes. The following can be said from the drawing.

When the processing time is short (3 minutes), it is observed that the surface is still uneven in many places and there is a projection-shaped small portion on the surface. (Although not shown in the drawing, the shorter the processing time, the larger the number of projection-shaped portions. The processing time of 3 minutes is a boundary where a projection is not noticeable.)

It is known that if the processing time is increased, the number of these irregularities and projections is decreased and the surface becomes smooth accordingly.

On the other hand, the cross-sectional photograph shows that the thickness of the Si surface layer has hardly been changed on the cross section from the processing time of 3 minutes to the processing time of 8 minutes. When the amount of Si of each film was analyzed, the amount of Si in a film corresponding to a processing time of 3 minutes was 3 wt%, the amount of Si in a film corresponding to a processing time of 4 minutes was 6 wt%, the amount of Si in a film corresponding to a processing time of 6 minutes was 8 wt%, and the amount of Si in a film corresponding to a processing time of 8 minutes was 6 wt%. When the processing time is short, a sufficient amount of Si is not injected into the surface layer. However, it was found that when a certain amount of processing time elapsed (in this condition, 4 minutes), the amount of Si became sufficient and the surface became smooth accordingly. From the above, it can be seen that since the smoothness of a surface is not good if the amount of Si is small, 3 wt% or more is preferably required and more preferably, 6 wt% or more is required. (Although described in detail later, a test piece of 3 minutes corroded even though there was a slight effect of corrosion resistance as a result of having performed a corrosion test. There was no corrosion in the cases of 4 minutes, 6 minutes, and 8 minutes.)

It became clear that a timing at which the surface roughness was reduced and a timing at which the amount of Si of the surface layer became sufficient were equal. The reason is considered as follows. Si is known as a material with a low viscosity when it melts. In the initial state of processing, Si is not sufficiently contained in the surface layer. Accordingly, the roughness of the surface caused by the occurrence of electrical discharge becomes dominant near the melt viscosity of steel material which is a base material. When the processing proceeds and the Si concentration of the surface layer increases, the material easily flows when it melts. As a result, it is thought that the surface becomes smooth.

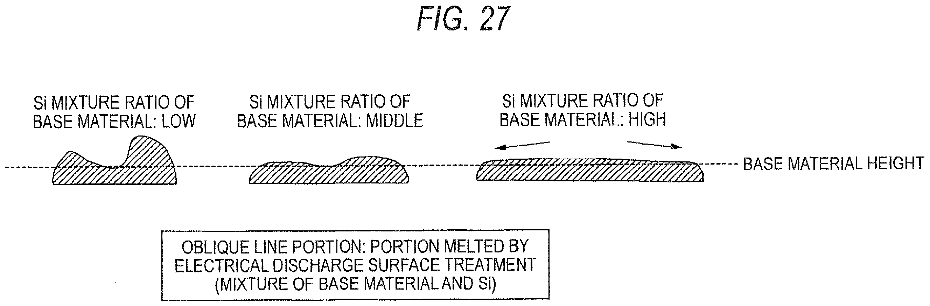

An explanatory view regarding this assumption is shown in Fig. 27.

Since it was found that the surface became smooth by injection of Si and the performance of the Si surface layer was exhibited, a clear index regarding how to decide a processing time was obtained.

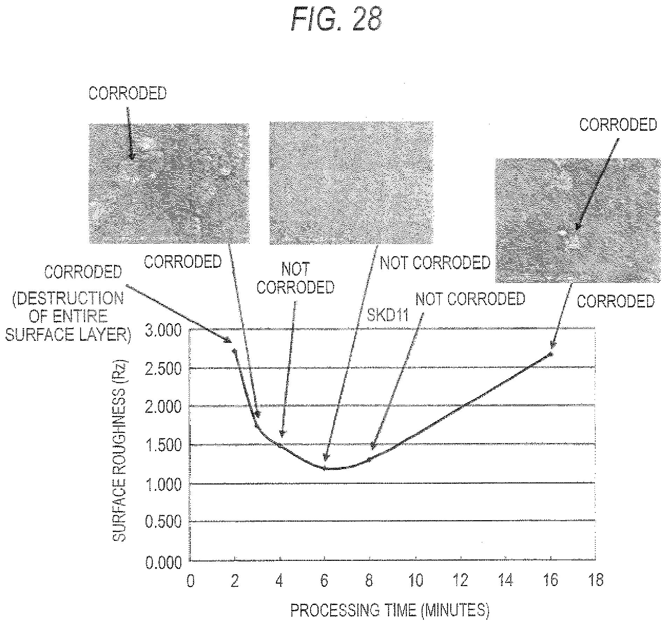

Although the processing time was discussed from the point of view of the roughness of a surface, the relationship between the processing time, the surface roughness, and the film performance was confirmed in more detail. As the film performance, only the evaluation of corrosion resistance is shown herein. Fig. 28 is a graph showing the relationship between a processing time and the surface roughness (Rz) when changing the processing time of the cold die steel SKD11.

Here, as the processing condition, an Si electrode with an area of 10 mm × 10 mm is used. For the area of 10 mm × 10 mm, setting of a current value of a current pulse ie = 8A, a pulse width te = 8 µs, and a pause time of electrical discharge to = 64 µs was adopted. That is, under the conditions where the energy of a pulse was about 60 A·µs, the processing time was 2 minutes, 3 minutes, 4 minutes, 6 minutes, 8 minutes, and 16 minutes. Moreover, in the drawing, there is shown an electron microscope (SEM) photograph after immersing a test piece in aqua regia and performing a corrosion test for each (part of) processing time.

In the case of processing time of 2 minutes, the surface corroded and the surface layer could not be seen at all. In the case of processing time of 3 minutes, the surface layer remained, but corrosion progressed severely to make the surface worn. Corrosion of a surface layer portion was not seen in the case of processing time of 4 minutes, 6 minutes, and 8 minutes. In the case of processing time of 16 minutes, marks corroded could be seen in a part. The reason why the roughness becomes good as the processing time becomes long is as described above. In addition, the reason why the roughness becomes worse when the processing time becomes long is presumably that a work piece is removed by electrical discharge, which is continued for a long time, and as a result, a precipitate inside the work piece appears. However, there are also many reasons which are not known in detail.

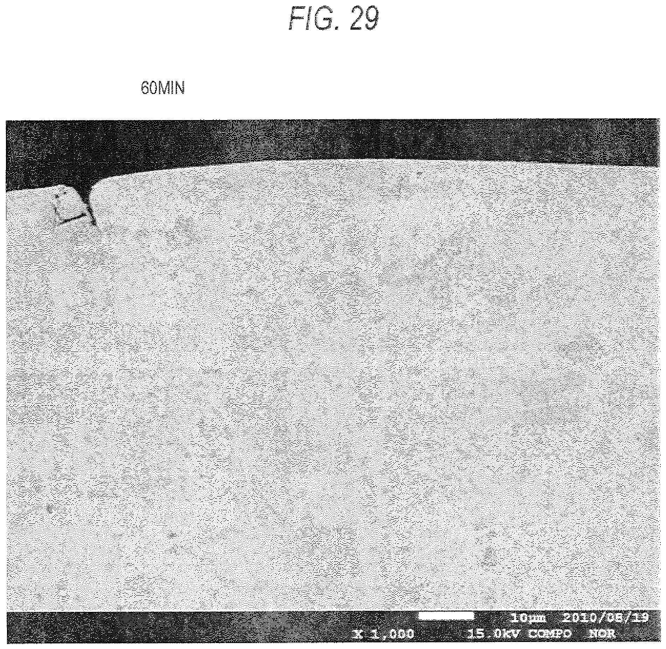

Fig. 29 shows a cross-sectional photograph of a surface layer when performing processing for 60 minutes in the corresponding conditions.

It can be seen that a non-uniform portion in the surface phase, which could not be seen in the case of an appropriate time, is seen and a deep hole exists there. The reason why a non-uniform portion appears if a processing time becomes long is not clear. However, it is difficult to remove components of precipitates, and they are accumulated in the surface phase. Accordingly, if the amount exceeds a certain amount, those uniformly distributed may appear as precipitates.

That is, as can be seen from Fig. 28, in these processing conditions, the surface roughness is reduced at the processing time of about 6 minutes (in this case, has a minimum value) and the corrosion resistance is high.

The range where the corrosion resistance is high is at the processing time of about 4 minutes. The surface roughness at this time was about 1.5 times the surface roughness at the time of 6 minutes which is a minimum value.

In addition, although not shown, when the processing time was long, the corrosion resistance was sufficient until about 12 minutes, and the surface roughness at that time was also about 1.5 times the surface roughness at the time of 6 minutes.

Therefore, in order for the Si surface layer to exhibit the performance, it is necessary that it is in a range up to about 1.5 times the surface roughness when the surface roughness is reduced. If this is applied to the processing time, it is necessary that it is in a range of 1/2 to twice the processing time when the surface roughness is reduced.

This phenomenon also changes with a work piece material. In a material such as SUS304, a phenomenon is seldom seen in which the material becomes coarse after the surface roughness is once reduced. In addition, also when it becomes coarse, swelling appears as a whole by consumption of an electrode wear and removal of a work piece rather than appearance of a precipitate.

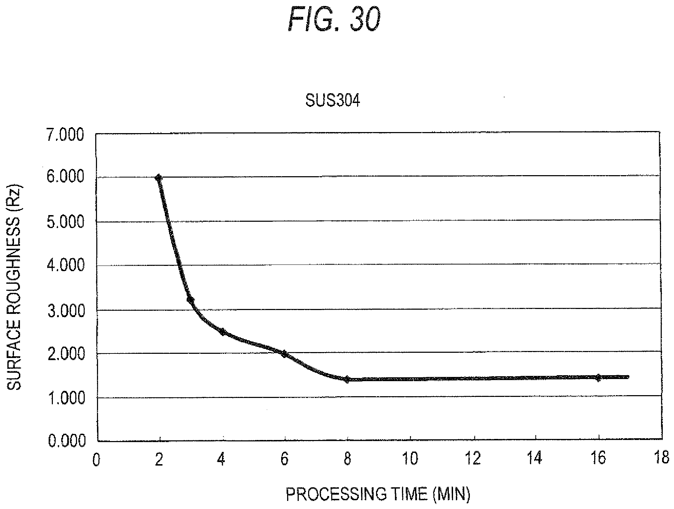

Fig. 30 shows a graph when SUS304 is set as a work piece. The processing conditions are the same as those in the case of SKD11 of Fig. 28.

As can be seen from the drawing, in the case of SUS304, about 8 minutes for which the surface roughness has been reduced is an optimal processing time (since a processing time is short, the film performance is obtained). Also at the time of about 6 minutes, appropriate corrosion resistance was acquired, and the surface roughness at that time was about 1.5 times the surface roughness at the time of 8 minutes. In the case of SUS304, even if a processing time became long, a phenomenon could not be seen in which the surface roughness increased rapidly like SKD11. In addition, a phenomenon did not appear either in which the corrosion resistance became worse rapidly even if the processing time became long. However, if the processing time becomes long, a recess of a processing portion, that is, a recess of a portion in which a surface layer is formed becomes large. For example, in the processing time of 12 minutes, the amount of recess becomes about 10 µm. This was an appropriate limit precision used as a mold.

Accordingly, even in the case of a material whose surface roughness does not become worse, a long processing time is not good, and it can be said that about twice the optimal value, at which the surface roughness is reduced, is an appropriate processing time.

As materials showing the transition of surface roughness shown in Fig. 28, there are S-C materials (S40C, S50C, and the like) and high-speed tool steel SKH51 and the like in addition to SKD11.

In addition, as materials showing the transition shown in Fig. 30, there is SUS630 or the like.

In addition, although the processing time has been described in the above explanation, the processing time itself is not the essential element. Originally, it is important how many electrical discharge pulses were generated per unit area or how much energy was supplied. In addition, the processing conditions described in Fig. 28 are conditions in which electrical discharge occurs 5000 to 6000 times per second. In the case of 6 minutes called an appropriate processing time, electrical discharge occurs 5000 to 6000 times/second × 60 seconds/minute × 6 minutes.

When the processing conditions are fixed, the ratio of the number of times of electrical discharge is the same as the ratio of processing time. However, if the processing conditions are changed midway, management based on the processing time is meaningless. Even in this case, management based on the number of times of electrical discharge is effective.

As described above, it became clear that a timing at which the surface roughness was reduced was the same as a timing at which Si was appropriately injected into the work piece and also the same as a time at which the performance of a film was exhibited.

A method of deciding a specific timing may be considered as follows.
1) In the case of deciding a processing end timing on the spot while actually performing the processing, the surface roughness of a treatment surface is periodically measured and the processing is made to proceed in order while checking a decrease in the surface roughness. Even if it is measured, the processing is ended at a point of time when the surface roughness is not reduced.
2) In the case of performing processing after deciding a processing time in advance, an electrode as a reference is prepared, the relationship between the processing time and the surface roughness is checked as shown in Figs. 28 and 30, and a time at which the surface roughness is reduced is set as an appropriate processing time in a reference processing area. When a reference electrode and the reference processing area are different in the case of actual machining, a processing time obtained by converting the area is calculated (in the same processing conditions, a time proportional to the area is set. When changing a period of electrical discharge by changing the processing conditions, a processing time is decided such that the number of times of electrical discharge per unit area becomes approximately equal), and the processing is performed for the processing time. Undoubtedly, such arrangement is not performed every machining, and it is preferable to acquire the data in advance so that it can be immediately used at the time of actual processing.
3) The processing time is not decided in advance, but it is checked beforehand from the data acquired in 2) what amount of electrode is consumed in the case of an appropriate processing time. At the time of actual processing, the processing is continued until an electrode reaches the amount of consumption.

Until now, three methods of deciding a processing time have been roughly described. However, various variations may be considered when this combination or the area changes. It was already described that small surface roughness was a suitable state for a surface layer. However, if the processing proceeds, there is a place where the surface roughness is a minimum value. The surface roughness which is suitable for a film is only about 1.5 times the minimum value, and it is preferable that the processing time is in a range from half of the processing time at that time to about twice. If it is exceeded greatly, the concentration of Si is reduced or a precipitate appears on the surface. As a result, the corrosion resistance and the erosion resistance are reduced. In addition, when the processing time is long, a recess of a processing portion becomes large and this is not appropriate for practical use.

In the case where the above described are processed in the same processing conditions, a range of a desirable processing time can be expressed as 1/2T0 ≤ T ≤ 2T0 assuming that a processing time at which the surface roughness is reduced is T0.

In addition, although this is a repetition of that described until now, a desirable electrical discharge pulse width range N is expressed as 1/2N0 ≤ N ≤ 2N0 assuming that the number of electrical discharge pulses when the surface roughness is reduced (at the optimal processing time) is N0.

Since a processing time may change with a portion when performing processing on a part or a mold with a three-dimensional shape or the like, attention needs to be paid.

In addition, although the transition of surface roughness has been described so far, the surface roughness referred to herein is roughness as a surface formed by electrical discharge. That is, in connection with the surface roughness of an original base material, a good surface with surface roughness equal to or larger than a predetermined level is required. The above explanation was made at least on the assumption that the surface roughness of an original base material is smaller than irregularities which can be generated by the occurrence of electrical discharge.

That is, the discussed content is that when electrical discharge occurs, irregularities caused by the electrical discharge are formed on the surface. However, as an appropriate amount of Si is injected into the base material, the irregularities caused by electrical discharge are reduced.

In the case of a surface used in a normal mold or a high-precision part, these conditions are applied. Accordingly, a phenomenon in which the surface roughness is increased and then decreased appears as described so far. However, in the case where the surface roughness of an original base material is low, it is natural that there is no transition in which the surface roughness is increased and then decreased if it is viewed only from the value measured by total surface roughness. In this case, that described so far are similarly effective undoubtedly. However, predetermined correction is needed for a value described as surface roughness. The correction means that it is necessary to subtract the surface roughness of an original base material. In practice, it is to find a timing in advance, at which the surface roughness is increased in a fine base material (test piece for taking out the conditions) with another surface roughness and is then decreased, and to perform the processing for the corresponding processing time.

In the meantime, the reason why the Si surface layer of the present invention is excellent in erosion resistance performance is considered as follows. Generally, it is said that the erosion resistance is strongly correlated with the hardness. However, as also can be seen from the evaluation result described above, there are also many points which are difficult to explain only with the hardness. As an element other than the hardness, properties of the surface influence it. It can be seen that a specular surface rather than a coarse surface increases the erosion resistance. The properties of the surface may also be mentioned as a reason why the erosion resistance is excellent in the Si surface layer. The Si surface layer is hard to some extent so as to have a hardness of 600 HV to 1100 HV. It is a smooth surface in regard to the properties of the surface. It is thought that this influences the erosion resistance.

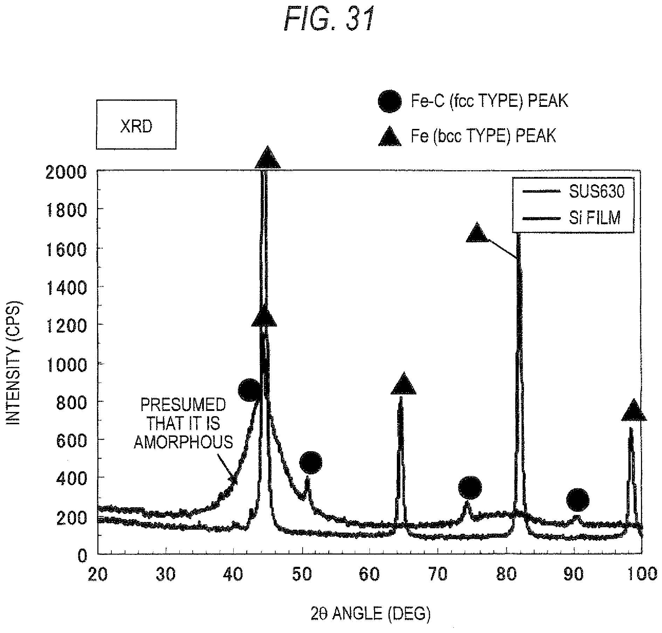

In addition, in the case of a normal hard film (for example, the above-described TiC film or a hard film formed by PVD, CVD, and the like) is low in toughness. Accordingly, the film is broken by minimal deformation. However, the Si surface layer has a characteristic in which a crack or the like is not easily generated, due to high toughness, even if a force for deformation is applied. This is thought to be one of the causes of high erosion resistance. In addition, it is thought that the crystal structure of the Si surface layer also influences it. An X-ray diffraction result of an Si surface layer formed in the conditions of the range of the present invention is shown in Fig. 31. In this drawing, a diffraction image when an Si surface layer is formed on SUS630 as a base material is shown.

As can be seen from the diffraction image of the Si surface layer, a peak of the base material is seen, but a broad background where formation of an amorphous structure is recognized is observed. That is, the Si surface layer is amorphous. For this reason, it can be thought that breakage in the crystal boundary, which easily occurs in a normal material, hardly occurs.

Meanwhile, the Si surface layer described in this specification is an Si-concentration layer containing 3 to 11 wt% of Si, which is different from the layer of 3µm described in Patent Document 1.

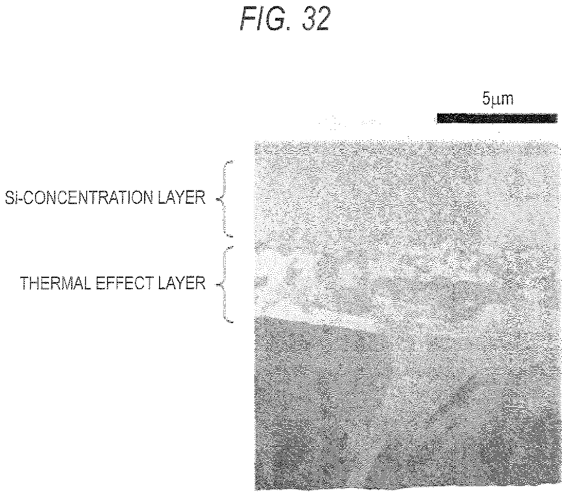

If corresponding definition is explained in detail, since the thickness of a layer is specified by observation using an optical microscope regarding the layer described in Patent Document 1, the thickness including the Si surface layer described in this specification and a thermal effect layer by electrical discharge surface treatment is defined as a layer of film thickness as shown in Fig. 32.

In addition, in the embodiment of the present invention, the explanation was made using Si as an electrode. However, even in the case of an electrode in which another component is mixed as well as an electrode of Si 100%, the same effect can be acquired if a predetermined amount of Si is contained in the surface layer.

### Industrial Applicability

The surface treatment method related to the present invention is useful for applications to corrosion-resistant and erosion-resistant parts.

### Reference Signs List

1: electrode
2: work piece
3: machining fluid
4: DC power supply
5: switching element
6: current limiting resistor
7: control circuit
8: electrical discharge detecting circuit

## Claims

1. A surface layer comprising:
an amorphous structure formed on a work piece (2) surface by moving an electrode material to the work piece by repeatedly generating pulsed electrical discharge between an electrode for electrical discharge surface treatment, which contains Si as a main component, and the work piece surface,
wherein the Si component is contained in a range of 3 to 11 wt% and has a thickness of 5 to 10 µm.

2. The surface layer according to claim 1,
wherein the Si component measured by an energy dispersive X-ray spectroscopic method (EDX) is contained in a range of 6 to 9 wt%.

3. A surface layer forming method comprising:
a step of placing a work piece (2) in a machining fluid (3); and
a step of forming a surface layer containing Si by disposing an electrode (1) for electrical discharge surface treatment, which contains Si as a main component, so as to be separated from the work piece by a predetermined distance and applying a predetermined voltage for occurrence of electrical discharge so that an electrode component is supplied from the electrode for electrical discharge surface treatment to the work piece side,
wherein the surface layer in which an Si component is contained in a range of 3 to 11 wt% and which has a thickness of 5 to 10 µm is formed by repeatedly generating an electrical discharge pulse, a value of time integral of a current value of the electrical discharge pulse being in a range of 30 A·µs to 80 A·µs.

4. The surface layer forming method according to claim 3,
wherein the electrode for electrical discharge surface treatment containing Si as a main component selects a member with a resistivity of 0.01 Ωcm or less.

## Patentansprüche

1. Oberflächenschicht, aufweisend:
eine amorphe Struktur, die auf einer Oberfläche eines Werkstücks (2) durch Bewegen eines Elektrodenmaterials zu dem Werkstück durch wiederholtes Erzeugen von gepulster elektrischer Entladung zwischen einer Elektrode für die Oberflächenbehandlung vermittels elektrischer Entladung, die Si als Hauptbestandteil enthält, und der Werkstückoberfläche, gebildet ist,
wobei der Si-Bestandteil in einem Bereich von 2 bis 11 Gewichtsprozent enthalten ist und eine Dicke von 5 bis 10 µm aufweist.

2. Oberflächenschicht nach Anspruch 1,
wobei der Si-Bestandteil, gemessen durch ein Verfahren der energiedispersiven Röntgenspektroskopie (EDX), in einem Bereich von 6 bis 9 Gewichtsprozent enthalten ist.

3. Verfahren zur Bildung einer Oberflächenschicht, welches umfasst:
einen Schritt zur Platzierung eines Werkstücks (2) in einem Bearbeitungsfluid (3); und
einen Schritt zur Bildung einer Si enthaltenden Oberflächenschicht durch Anordnen einer Elektrode (1) zur Oberflächenbehandlung vermittels elektrischer Entladung, die Si als Hauptbestandteil enthält, derart, dass diese um einen vorgegebenen Abstand von dem Werkstück getrennt ist, und Anlegen einer vorgegebenen Spannung zur Bewirkung von elektrischer Entladung, so dass ein Elektrodenbestandteil von der Elektrode zur Oberflächenbehandlung vermittels elektrischer Entladung auf die Seite des Werkstücks zugeführt wird,
wobei die Oberflächenschicht, in der ein Si-Bestandteil in einem Bereich von 3 bis 11 Gewichtsprozent enthalten ist und die eine Dicke von 5 bis 10 µm hat, durch wiederholtes Erzeugen eines elektrischen Entladungsimpulses gebildet wird, wobei ein Wert des Zeitintegrals eines Stromstärkewerts des elektrischen Entladungsimpulses in einem Bereich von 30 A • µs bis 80 A • µs liegt.

4. Verfahren zur Bildung einer Oberflächenschicht nach Anspruch 3,
wobei die Elektrode zur Oberflächenbehandlung vermittels elektrischer Entladung, die Si als Hauptbestandteil enthält, ein Element mit einer elektrischen Leitfähigkeit von 0,01 Ωcm oder weniger wählt.

## Revendications

1. Couche superficielle comprenant :
une structure amorphe formée sur une surface de pièce à usiner (2) par déplacement d'un matériau d'électrode sur la pièce à usiner par production répétée d'une décharge électrique pulsée entre une électrode pour un traitement de surface par décharge électrique, qui contient du Si comme composant principal, et la surface de pièce à usiner,
dans laquelle le composant Si est contenu dans une plage de 3 à 11 % en poids et a une épaisseur de 5 à 10 µm.

2. Couche superficielle selon la revendication 1,
dans laquelle le composant Si mesuré par un procédé spectroscopique de rayons X à énergie dispersive (EDX) est contenu dans une plage de 6 à 9 % en poids.

3. Procédé de formation de couche superficielle comprenant :
une étape consistant à placer une pièce à usiner (2) dans un fluide d'usinage (3) ; et
une étape consistant à former une couche superficielle contenant du Si par disposition d'une électrode (1) pour un traitement de surface par décharge électrique, qui contient du Si comme composant principal, de façon à être séparée de la pièce à usiner par une distance prédéterminée et par application d'une tension prédéterminée pour la survenue d'une décharge électrique de sorte qu'un composant d'électrode est fourni à partir de l'électrode pour un traitement de surface par décharge électrique sur le côté de la pièce à usiner,
dans lequel la couche superficielle dans laquelle un composant de Si est contenu dans une plage de 3 à 11 % en poids et qui a une épaisseur de 5 à 10 µm est formée par production répétée d'une impulsion de décharge électrique, une valeur d'intégrale dans le temps d'une valeur de courant de l'impulsion de décharge électrique étant dans une plage de 30 A·µs à 80 A·µs.

4. Procédé de formation de couche superficielle selon la revendication 3,
dans lequel l'électrode pour un traitement de surface par décharge électrique contenant du Si comme composant principal choisit un élément avec une résistivité de 0,01 Ωcm ou moins.
